# EUROPEAN PATENT SPECIFICATION

(11) **EP 2 283 755 B1**
(45) Date of publication and mention of the grant of the patent: **04.07.2012**
(21) Application number: 09175392.1
(22) Date of filing: 09.11.2009
(51) Int. Cl.: A47J 31/36

(54) **Infusion unit**
Aufgusseinheit
Unité d'infusion

(30) Priority: 10.08.2009 IT BS20090152
(43) Date of publication of application: 16.02.2011
(73) Proprietor: Capitani S.r.l., 22070 Solbiate (CO) (IT)
(72) Inventor: Capitani, Gionata, I-22070, Albiolo, COMO (IT)
(74) Representative: Chimini, Francesco

(56) References cited:
- EP-A1- 1 721 553
- EP-A1- 2 070 452
- WO-A1-2008/004116

## Description

The present invention relates to an infusion unit, for example for coffee machines, of the type functioning with pods or capsules containing aromatic substances.

Numerous infusion units for coffee machines are known of in the art. Such devices, exemplified by WO 2008004116, usually comprise a male infusor, which supplies an extraction fluid, and a female infusor.

The pod, containing aromatic substances, is transported inside the female infusor, into the so-called infusion chamber, so that the aromatic substance is extracted through the male infusor.

To such purpose, the devices of the known art comprise means of receiving and moving the pod which enable the correct receipt, alignment and insertion in the infusion chamber and expulsion from the infusion chamber upon completion of dispensing of the drink.

In the known solutions, such means comprise, for example, a pod-holder carriage defining a housing seat of a capsule. The carriage is then pushed, for example by the mobile infusor itself, towards the infusion chamber for the insertion of the capsule or pod in said chamber. To perform this operation, means suitable to allow shifting of the carriage from the insertion trajectory of the capsule in the infusion chamber by the mobile infusor, and means suitable to permit the return of the carriage to its rearward starting position must be provided.

The purpose of the present invention is to propose a new infusion unit having different and simpler means for receipt and movement of the capsule or pod and which therefore have a more reliable structure as well as being more advantageous and cheaper to produce and assemble.

Such purpose is achieved by an infusion unit according to claim 1.

The dependent claims describe particularly advantageous embodiments of the infusion unit.

Preferred embodiments of the infusion unit according to the present invention will be described in detail below, with the help of the attached figures, wherein:

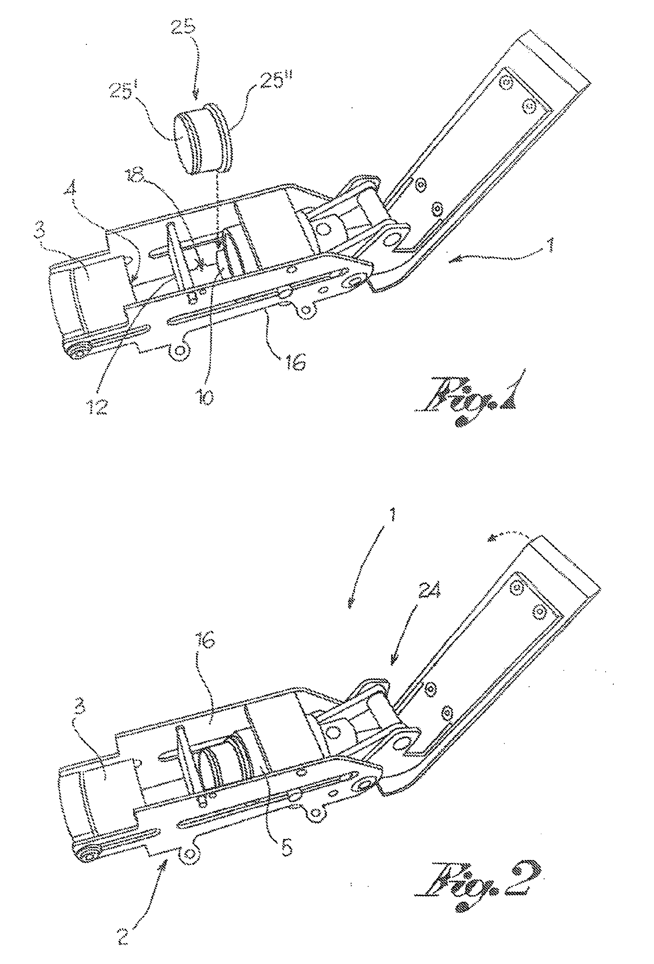

- figure 1 shows a perspective view of the infusion unit according to the invention, during the capsule insertion phase;
- figure 2 shows the infusion unit in figure 1, with the capsule inserted;
- figure 3 shows the infusion unit during the closing phase of the infusion chamber; and
- figure 4 shows the infusion unit during the opening phase of the infusion chamber.

With reference to such figures, reference numeral 1 globally denotes, in its totality, an infusion unit, for example for coffee machines, of the type functioning with pods or capsules 25 containing aromatic substances.

The infusion unit 1 comprises a female infusor 3 which defines an infusion chamber 4 suitable to house a capsule 25 for the production of an infused drink and a male infusor 5, suitable to co-operate with the female infusor 3 to close said chamber 4 at least partially. The female infusor and the male infusor are supported by a frame 2. For example, said frame 2 has a parallelepiped box structure, which extends mainly along a main axis (X), which for simplicity will be assumed horizontal.

The frame comprises two lateral walls 16 opposite each other and parallel to the main axis. The male infusor and the female infusor are positioned between said lateral walls 16.

According to one embodiment, the frame 2 has a loading aperture 18 of the capsule and an emptying aperture 20 of the used capsule from the infusion chamber 4, for example into a collection tray of the used pods provided under the infusion unit 1.

At least one of said male 5 and female 3 infusors is movable along a translation axis (X), coinciding or parallel to the main axis of the frame. The mobile infusor, in the example shown the male infusor 5, is movable between a rearward, open position and a forward, closed position of the infusion chamber.

According to the invention, one of said male or female infusors has a support element 10 of the pod or capsule, preferably a hollow rim which extends from said infusor parallel to the translation axis (X). In addition, the infusion unit comprises an anti-tipping device 12 of the pod or capsule, positioned between the male and female infusor and hinged to the frame so as to oscillate between an active position essentially orthogonal to the translation axis (X), in which it acts on the capsule, keeping it on the support element of the male or female infusor, and an inactive position, essentially parallel to said translation axis (X), which permits shifting of the mobile infusor along said translation axis.

In fact, the support element 10 is suitable to engage the capsule when this is manually loaded by the user, but does not extend as much as to support it completely, otherwise the support element would obstruct insertion of the capsule in the infusion chamber by the mobile infusor. On the contrary, the support element 10 is shaped so as to accommodate one end of the capsule, preferably the front end 25" having a rim projecting radially. As a result, the capsule would tend to pivot on its supported end and tip backwards, falling out of the infusion unit or in any case deviating from the insertion trajectory into the infusion chamber. The anti-tipping device 12, acting to sustain the non-supported end, for example on the bottom wall 25' of the capsule, keeps it in the correct position for being pushed and introduced into the infusion chamber.

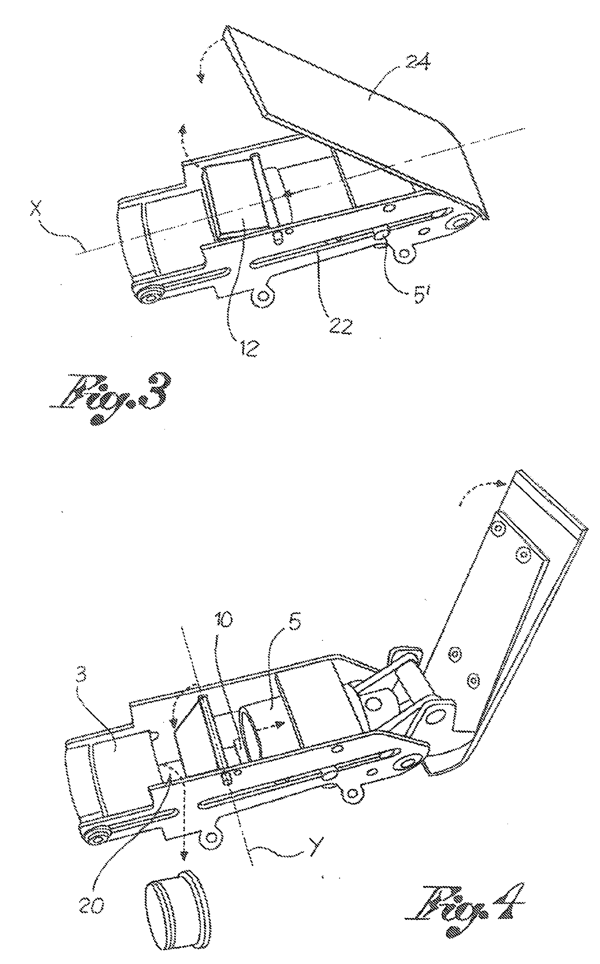

It should be noted that the supportive effect of the capsule performed by the anti-tipping device 12 continues during movement of the mobile infusor 5, thanks to the possibility of oscillating pushed by the mobile infusor, until the capsule intercepts the infusion chamber. In this moment, the anti-tipping device 12 finds itself in a position essentially parallel to the translation axis (X), and therefore in an uninfluential position for the complete insertion of the capsule in the infusion chamber (figure 3).

Preferably, the anti-tipping device 12 is hinged to the frame so that its oscillation axis (Y) is orthogonal to the lateral walls 16 of the frame.

According to one embodiment, the anti-tipping device comprises a plate hinged to the lateral walls of the frame at one of its ends so as to oscillate between a lowered position, essentially orthogonal to the translation axis (X), and a raised position essentially parallel to said axis.

According to one embodiment, the anti-tipping device is a floating body, in other words freely oscillating and movable to the inactive position by the mobile infusor during its translation along the translation axis (X).

In one embodiment variation, the anti-tipping device returns to an active position, that is orthogonal to the translation axis (X) with the assistance of return means.

According to one advantageous embodiment, depending on the depth of the capsule, the anti-tipping device is positioned in relation to the infusor with the support element 10, at a distance such as to keep the axis of the capsule parallel to the translation axis (X). For example, the oscillation pin 12' of the anti-tipping device 12 is inserted at the ends in slots made in the lateral walls 16, so as to be able to vary its distance from the infusor along the translation axis (X), depending on the depth or shape of the capsule.

According to one embodiment, in the lateral walls of the frame are guide means for the translation of the mobile infusor. For example, in at least one of said lateral walls, preferably in both, there is a guide slot 22 which a transversal pin 5' extending from the mobile infusor engages in.

In one embodiment, the infusion unit comprises in addition elastic return means suitable to draw the mobile infusor back to a rearward position (not shown).

Furthermore, the infusion unit comprises manually operable driving means for the forward or backward movement of the mobile infusor 5. In the example shown, said driving means comprise a toggle lever 24.

In one embodiment variation, the driving means of the male infusor 5 comprise a cam lever.

It should be noted that, advantageously, if during the rearward movement of the male infusor the capsule remains attached rather than falling into the used capsule container, for example because the unit has remained closed for a certain period of time with the capsule inserted, the oscillating, anti-tipping device, returning to its active start position, collides with the capsule causing it to detach from the male infusor and thus fall into the collection tray.

Innovatively, the infusion unit according to the invention does not require any pod-holder carriage or other specific means of receiving and moving the capsule. The capsule is rather retained by a support element, made simply as an extension of a peripheral portion of an infusor, and the anti-tipping device, for example formed of a simple floating plate.

Advantageously, the anti-tipping device 12 performs an oscillatory movement only and does not need any translation movement, and therefore, any guide means.

Advantageously, the anti-tipping device 12 adopts an inactive position, that is uninfluential on the insertion of the capsule in the infusion chamber, by simply adopting a position essentially parallel to the translation axis (X) under the thrust of the mobile infusor itself. The infusion unit does not therefore require specific means suitable to free the capsule from its housing seat.

The infusion unit is therefore simple to construct and permits production with reduced manufacturing and assembly costs.

Advantageously, the infusion unit which the present invention relates to requires little maintenance thanks to the absence of delicate components, which would otherwise require periodic calibration and adjustment.

A person skilled in the art, may make modifications, variations and replacements of elements with others functionally equivalent, to the embodiments of the infusion unit described above, so as to satisfy contingent requirements, while remaining within the scope of protection of the following claims. Each of the claims described as belonging to a possible embodiment may be realised independently of the other embodiments described.

## Claims

1. Infusion unit (1), for example for coffee machines, of the type functioning with pods or capsules (25) containing aromatic substance, comprising a frame (2) supporting a female infusor (3) and a male infusor (5), where said female infusor defines an infusion chamber (4) suitable to accommodate a pod or capsule (25) for the production of an infused drink, where the male infusor (5) is suitable to co-operate with the female infusor (3) to at least partially close said chamber (4), and where at least one of said male (5) and female (3) infusors is movable in relation to the other along a translation axis (X) between a rearward, open position and a forward, closed position of the infusion chamber, **characterised by** the fact that one of said male or female infusors has a support element (10) of the capsule or pod (25) and by the fact of comprising, in addition, an anti-tipping device (12) for preventing the tipping of the pod, said anti-tipping device being placed between the male and female infusor and being hinged to the frame so as to oscillate between an active position essentially orthogonal to the translation axis (X), wherein it cooperates with the pod so as to keep it on the support element of the male or female infusor, and an inactive position, essentially parallel to said translation axis (X), which enables shifting of the mobile infusor along said translation axis.

2. Infusion unit according to claim 1, wherein the frame comprises lateral containment walls (16) of the male and female infusors, and wherein the oscillation axis (Y) of said anti-tipping device is orthogonal to said lateral walls.

3. Infusion unit according to claim 2, wherein the anti-tipping device (12) comprises a plate hinged to the lateral walls of the frame at one of its extremities so as to oscillate between a lowered position essentially orthogonal to the translation axis (X) and a raised position, essentially parallel to said axis.

4. Infusion unit according to any of the previous claims, wherein the anti-tipping device is movable to the inactive position by the mobile infusor during the translation along the translation axis of said mobile infusor (X).

5. Infusion unit according to any of the previous claims, wherein the anti-tipping device returns to an active position with the assistance of return means.

6. Infusion unit according to any of the previous claims, wherein the support element extends from the male or female infusor in such a way as to engage the capsule at one end, the anti-tipping device being positioned so as to act on the opposite end the capsule.

7. Infusion unit according to claim 6 wherein, depending on the depth of the capsule, the anti-tipping device is positioned in relation to the infusor with the support element, at a distance such as to keep the axis of the capsule parallel to the translation axis (X).

8. Infusion unit according to any of the previous claims, wherein the support element extends from the male infusor and wherein the anti-tipping device acts on the bottom wall (25') of the capsule.

9. Infusion unit according to any of the previous claims, wherein the support element (10) is in the shape of a concave rim which extends from a portion of the peripheral rim of the male or female infusor, parallel to the translation axis (X).

10. Infusion unit according to any of the previous claims, wherein the frame has at least one loading aperture (18) of the capsule and one emptying aperture (20) of the used capsule from the infusion chamber.

11. Infusion unit according to any of the previous claims, wherein there are guidance means (22) in the lateral walls (16) of the frame for the translation of the mobile infusor.

12. Infusion unit according to the previous claim, wherein there is a guide slot in at least one of said lateral walls which engages a transversal pin (5') extending from the mobile infusor.

13. Infusion unit according to any of the previous claims, comprising, in addition, elastic return means suitable to draw back the mobile infusor to a rearward position.

14. Infusion unit according to any of the previous claims, comprising, in addition, manually operable driving means suitable for bringing the mobile infusor forwards or backwards.

15. Infusion unit according to claim 14, wherein said driving means comprise a toggle lever (24).

## Patentansprüche

1. Aufgusseinheit (1), zum Beispiel für Kaffeemaschinen, des mit aromatische Substanzen enthaltenden Hülsen oder Kapseln (25) funktionierenden Typs, beinhaltend einen Rahmen (2), der ein weibliches Aufgussstück (3) und ein männliches Aufgussstück (5) trägt, wobei das weibliche Aufgussstück eine Aufgusskammer (4) definiert, die zur Aufnahme einer Hülse oder Kapsel (25) geeignet ist zur Herstellung eines Aufgussgetränks, wobei das männliche Aufgussstück (5) zum Kooperieren mit dem weiblichen Aufgussstück (3) geeignet ist zum zumindest teilweisen Verschließen der Kammer (4), und wobei zumindest eines der männlichen (5) und weiblichen (3) Aufgussstücke relativ zu dem anderen entlang einer Translationsachse (X) zwischen einer rückseitigen, offenen Position und einer vorderseitigen, geschlossenen Position der Brühkammer beweglich ist, **gekennzeichnet durch** die Tatsache, dass einer der männlichen oder weiblichen Aufgussstücke ein Trägerelement (10) für die Kapsel oder Hülse (25) aufweist, und **durch** die Tatsache des zusätzlichen Beinhaltens einer Antikippvorrichtung (12) zum Verhindern des Kippens der Hülse, wobei die Antikippvorrichtung zwischen dem männlichen und dem weiblichen Aufgussstück angeordnet ist und derart an den Rahmen angelenkt ist, dass es oszillieren kann zwischen einer aktiven Position im Wesentlichen orthogonal zur Translationsachse (X), in der sie mit der Hülse zum Festhalten derselben auf dem Trägerelement des männlichen oder weiblichen Aufgussstücks kooperiert, und einer inaktiven Position im Wesentlichen parallel zur Translationsachse (X), was ein Verschieben des mobilen Aufgussstücks entlang der Translationsachse ermöglicht.

2. Aufgusseinheit nach Anspruch 1, wobei der Rahmen laterale Behälterwände (16) der männlichen und weiblichen Aufgussstücke beinhaltet und wobei die Oszillationsachse (Y) der Antikippvorrichtung orthogonal zu diesen lateralen Wänden ist.

3. Aufgusseinheit nach Anspruch 2, wobei die Antikippvorrichtung (12) eine Platte beinhaltet, die mit einer ihrer Extremitäten an den lateralen Wänden des Rahmens angelenkt ist, um so zwischen einer abgesenkten Position im Wesentlichen orthogonal zu der Translationsachse (X) und einer erhöhten Position im Wesentlichen parallel zu dieser Achse zu oszillieren.

4. Aufgusseinheit nach einem der vorhergehenden Ansprüche, wobei die Antikippvorrichtung durch das mobile Aufgussstück während der Translation entlang der Translationsachse des mobilen Aufgussstücks (X) in die inaktive Position beweglich ist.

5. Aufgusseinheit nach einem der vorhergehenden Ansprüche, wobei die Antikippvorrichtung mit Hilfe von Rückführungsmitteln in eine aktive Position zurückkehrt.

6. Aufgusseinheit nach einem der vorhergehenden Ansprüche, wobei das Trägerelement sich derart von dem männlichen oder weiblichen Aufgussstück aus erstreckt, um die Kapsel an einem Ende zu ergreifen, wobei die Antikippvorrichtung zum Einwirken auf das gegenüberliegende Ende der Kapsel angeordnet ist.

7. Aufgusseinheit nach Anspruch 6, wobei die Antikippvorrichtung abhängig von der Tiefe der Kapsel relativ zum Aufgussstück mit dem Trägerelement in einem solchen Abstand positioniert wird, dass die Achse der Kapsel parallel zur Translationsachse (X) gehalten wird.

8. Aufgusseinheit nach einem der vorhergehenden Ansprüche, wobei das Trägerelement sich vom männlichen Aufgussstück aus erstreckt und wobei die Antikippvorrichtung auf die untere Wand (25') der Kapsel einwirkt.

9. Aufgusseinheit nach einem der vorhergehenden Ansprüche, wobei das Trägerelement (10) die Form einer konkaven Kante hat, die sich von einem Abschnitt der peripheren Kante des männlichen oder weiblichen Aufgussstücks parallel zur Translationsachse (X) erstreckt.

10. Aufgusseinheit nach einem der vorhergehenden Ansprüche, wobei der Rahmen zumindest eine Ladeöffnung (18) für die Kapsel und eine Entladeöffnung (20) für die benutzte Kapsel aus der Aufgusskammer aufweist.

11. Aufgusseinheit nach einem der vorhergehenden Ansprüche, wobei Führungsmittel (22) in den lateralen Wänden (16) des Rahmens für die Verschiebung des mobilen Aufgussstücks vorgesehen sind.

12. Aufgusseinheit nach dem vorhergehenden Anspruch, wobei ein Führungsschlitz in zumindest einer der lateralen Wände ausgebildet ist, der einen transversalen Bolzen (5') aufnimmt, der sich vom mobilen Aufgussstück aus erstreckt.

13. Aufgusseinheit nach einem der vorhergehenden Ansprüche, zusätzlich beinhaltend elastische Zurückführungsmittel, die zum Zurückziehen des mobilen Aufgussstücks in eine rückseitige Position geeignet sind.

14. Aufgusseinheit nach einem der vorhergehenden Ansprüche, zusätzlich beinhaltend manuell bedienbare Antriebsmittel, die zum Vorwärts- oder Rückwärtsbewegen des mobilen Aufgussstücks geeignet sind.

15. Aufgusseinheit nach Anspruch 14, wobei die Antriebsmittel einen Kniehebel (24) beinhalten.

## Revendications

1. Unité d'infusion (1), par exemple pour des machines à café, du type fonctionnant avec des dosettes ou des capsules (25) contenant une substance aromatique, comprenant un châssis (2) supportant un dispositif d'infusion femelle (3) et un dispositif d'infusion mâle (5), dans laquelle ledit dispositif d'infusion femelle définit une chambre d'infusion (4) appropriée pour loger une dosette ou capsule (25) pour la production d'une boisson infusée, dans laquelle le dispositif d'infusion mâle (5) est approprié pour coopérer avec le dispositif d'infusion femelle (3) pour fermer au moins partiellement ladite chambre (4), et dans laquelle au moins l'un parmi lesdits dispositifs d'infusion mâle (5) et femelle (3) est mobile l'un par rapport à l'autre le long d'un axe de translation (X) entre une position arrière ouverte et une position fermée avant de la chambre d'infusion, **caractérisée en ce que** l'un parmi lesdits dispositifs d'infusion mâle ou femelle a un élément de support (10) de la capsule ou dosette (25) et **en ce qu'**elle comprend, en plus, un dispositif anti-renversement (12) pour empêcher le renversement de la dosette, ledit dispositif anti-renversement étant placé entre les dispositifs d'infusion mâle et femelle et étant articulé par rapport au châssis afin d'osciller entre une position active essentiellement orthogonale à l'axe de translation (X), dans laquelle elle coopère avec la dosette afin de la maintenir sur l'élément de support du dispositif d'infusion mâle ou femelle, et une position inactive, essentiellement parallèle à l'axe de translation (X), qui permet le déplacement du dispositif d'infusion mobile le long dudit axe de translation.

2. Unité d'infusion selon la revendication 1, dans laquelle le châssis comprend des parois de confinement latérales (16) des dispositifs d'infusion mâle et femelle, et dans laquelle l'axe d'oscillation (Y) dudit dispositif anti-renversement est orthogonal par rapport auxdites parois latérales.

3. Unité d'infusion selon la revendication 2, dans laquelle le dispositif anti-renversement (12) comprend une plaque articulée par rapport aux parois latérales du châssis à l'une de ses extrémités afin d'osciller entre une position abaissée essentiellement orthogonale à l'axe de translation (X) et une position levée, essentiellement parallèle audit axe.

4. Unité d'infusion selon l'une quelconque des revendications précédentes, dans laquelle ledit dispositif anti-renversement est mobile jusqu'à la position inactive grâce au dispositif d'infusion mobile pendant la translation le long de l'axe de translation dudit dispositif d'infusion mobile (X).

5. Unité d'infusion selon l'une quelconque des revendications précédentes, dans laquelle le dispositif anti-renversement revient dans une position active à l'aide de moyens de rappel.

6. Unité d'infusion selon l'une quelconque des revendications précédentes, dans laquelle l'élément de support s'étend à partir du dispositif d'infusion mâle ou femelle, afin de mettre en prise la capsule au niveau d'une extrémité, le dispositif anti-renversement étant positionné afin d'agir sur l'extrémité opposée de la capsule.

7. Unité d'infusion selon la revendication 6, dans laquelle, en fonction de la profondeur de la capsule, ledit dispositif anti-renversement est positionné par rapport au dispositif d'infusion avec l'élément de support, à une certaine distance afin de maintenir l'axe de la capsule parallèle à l'axe de translation (X).

8. Unité d'infusion selon l'une quelconque des revendications précédentes, dans laquelle l'élément de support s'étend à partir du dispositif d'infusion mâle et dans laquelle le dispositif anti-renversement agit sur la paroi inférieure (25') de la capsule.

9. Unité d'infusion selon l'une quelconque des revendications précédentes, dans laquelle l'élément de support (10) se présente sous la forme d'un bord concave qui s'étend à partir d'une partie du bord périphérique du dispositif d'infusion mâle ou femelle, parallèle à l'axe de translation (X).

10. Unité d'infusion selon l'une quelconque des revendications précédentes, dans laquelle le châssis a au moins une ouverture de chargement (18) de la capsule et une ouverture de vidage (20) de la capsule usagée de la chambre d'infusion.

11. Unité d'infusion selon l'une quelconque des revendications précédentes, dans laquelle on trouve des moyens de guidage (22) dans les parois latérales (16) du châssis pour la translation du dispositif d'infusion mobile.

12. Unité d'infusion selon l'une quelconque des revendications précédentes, dans laquelle on trouve une fente de guide dans au moins l'une desdites parois latérales qui met en prise une broche transversale (5') s'étendant à partir du dispositif d'infusion mobile.

13. Unité d'infusion selon l'une quelconque des revendications précédentes, comprenant, en plus, des moyens de rappel élastiques appropriés pour ramener le dispositif d'infusion mobile dans une position arrière.

14. Unité d'infusion selon l'une quelconque des revendications précédentes, comprenant, en plus, des moyens d'entraînement pouvant être actionnés manuellement, appropriés pour amener le dispositif d'infusion mobile vers l'avant ou vers l'arrière.

15. Unité d'infusion selon la revendication 14, dans laquelle lesdits moyens d'entraînement comprennent un levier à bascule (24).
